# EUROPEAN PATENT APPLICATION

(11) **EP 4 498 325 A1**
(43) Date of publication of application: **29.01.2025**
(21) Application number: 24191045.4
(22) Date of filing: 26.07.2024
(51) Int. Cl.: G06T 15/04, G06T 17/20, G06T 7/11

(54) **SYSTEMS AND METHODS FOR CONSTRUCTING A THREE-DIMENSIONAL WATCH MODEL FROM A WATCH IMAGE**

(30) Priority: 27.07.2023 US 202363515882 P; 19.07.2024 US 202418778546
(71) Applicant: Perfect Mobile Corp., 23141 New Taipei City (TW)
(72) Inventor: PENG, Hsin-Yi, Kaohsiung City (TW); CHENG, Chih-Yu, 116 Taipei City (TW)
(74) Representative: König, Andreas Rudolf

(57) **Abstract**

A computing device obtains an image depicting a watch and performs segmentation on the watch in the image to generate a segmented watch region comprising a watch case region, a first watch strap region, and a second watch strap region. The computing device generates a three-dimensional (3D) mesh according to the watch case region, the first watch strap region, the second watch strap region, and a pre-defined skeleton containing at least one straight part and at least two curved parts. The computing device generates texture attributes according to the segmented watch and applies the texture attributes to the 3D mesh to generate a textured 3D watch object. The computing device renders the textured 3D watch object in an augmented reality display.

## Description

### CROSS-REFERENCE TO RELATED APPLICATION

This application claims priority to, and the benefit of, U.S. Provisional Patent Application entitled, "Method for 3D Watch Object Reconstruction from a Watch Image," having Serial No. 63/515,882, filed on July 27, 2023, which is incorporated by reference in its entirety.

### TECHNICAL FIELD

The present disclosure generally relates to systems and methods for constructing a three-dimensional watch object from a watch image.

### SUMMARY

In accordance with one embodiment, a computing device obtains an image depicting a watch and performs segmentation on the watch in the image to generate a segmented watch region comprising a watch case region, a first watch strap region, and a second watch strap region. The computing device generates a three-dimensional (3D) mesh according to the watch case region, the first watch strap region, the second watch strap region, and a pre-defined skeleton containing at least one straight part and at least two curved parts. The computing device generates texture attributes according to the segmented watch and applies the texture attributes to the 3D mesh to generate a textured 3D watch object. The computing device renders the textured 3D watch object in an augmented reality display.

Another embodiment is a system that comprises a memory storing instructions and a processor coupled to the memory. The processor is configured to obtain an image depicting a watch and perform segmentation on the watch in the image to generate a segmented watch region comprising a watch case region, a first watch strap region, and a second watch strap region. The processor is further configured to generate a three-dimensional (3D) mesh according to the watch case region, the first watch strap region, the second watch strap region, and a pre-defined skeleton containing at least one straight part and at least two curved parts. The processor is further configured to generate texture attributes according to the segmented watch and apply the texture attributes to the 3D mesh to generate a textured 3D watch object. The processor is further configured to render the textured 3D watch object in an augmented reality display.

Another embodiment is a non-transitory computer-readable storage medium storing instructions to be implemented by a computing device. The computing device comprises a processor, wherein the instructions, when executed by the processor, cause the computing device to obtain an image depicting a watch and perform segmentation on the watch in the image to generate a segmented watch region comprising a watch case region, a first watch strap region, and a second watch strap region. The processor is further configured by the instructions to generate a three-dimensional (3D) mesh according to the watch case region, the first watch strap region, the second watch strap region, and a pre-defined skeleton containing at least one straight part and at least two curved parts. The processor is further configured by the instructions to generate texture attributes according to the segmented watch and apply the texture attributes to the 3D mesh to generate a textured 3D watch object. The processor is further configured by the instructions to render the textured 3D watch object in an augmented reality display

Other systems, methods, features, and advantages of the present disclosure will be apparent to one skilled in the art upon examining the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Various aspects of the disclosure are better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a computing device configured to construct a 3D watch object from a watch image according to various embodiments of the present disclosure.
FIG. 2 is a schematic diagram of the computing device of FIG. 1 in accordance with various embodiments of the present disclosure.
FIG. 3 is a top-level flowchart illustrating examples of functionality implemented as portions of the computing device of FIG. 1 for constructing a 3D watch object from a watch image according to various embodiments of the present disclosure.
FIG. 4 illustrates an example user interface provided on a display of the computing device of FIG. 1 whereby a 2D image of a watch design is obtained and displayed to the user according to various embodiments of the present disclosure.
FIG. 5 illustrates an example of a segmentation mask generated from an image of a watch design according to various embodiments of the present disclosure.
FIG. 6 illustrates generation of a first intermediate 3D mesh according to various embodiments of the present disclosure.
FIG. 7 illustrates generation of second and third intermediate 3D meshes according to various embodiments of the present disclosure.
FIG. 8 illustrates application of a warping operation to the third intermediate 3D mesh to generate the 3D mesh according to various embodiments of the present disclosure.
FIG. 9 further illustrates the warping operation according to various embodiments of the present disclosure.
FIG. 10 illustrates an example user interface where the textured 3D watch object is shown being worn by the user according to various embodiments of the present disclosure.

### DETAILED DESCRIPTION

The subject disclosure is now described with reference to the drawings, where like reference numerals are used to refer to like elements throughout the following description. Other aspects, advantages, and novel features of the disclosed subject matter will become apparent from the following detailed description and corresponding drawings.

The jewelry industry has seen significant advancements in recent years with the incorporation of such technology as computer-aided design (CAD) and three-dimensional (3D) printing to streamline the design and manufacturing processes. Despite these advancements, however, creating custom watches traditionally requires specialized skills and extensive manual labor. To address these challenges, embodiments are disclosed for constructing a 3D watch object from a two-dimensional (2D) watch image for providing designers with an efficient tool for facilitating the evaluation of different watch designs. Notably, individuals are able to merely provide designers with 2D images of watch designs of interest. Three-dimensional 3D watch objects are rendered in an augmented reality display where individuals are shown wearing the 3D watch objects, thereby reducing the time and resources required for designing and producing watch designs.

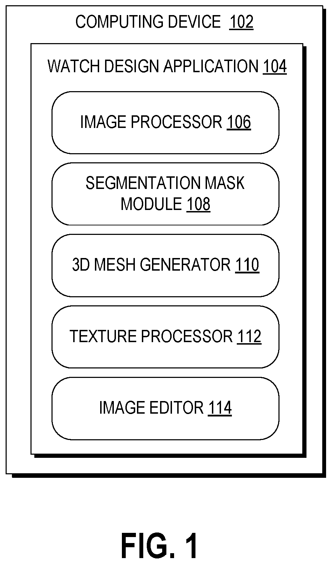

A description of a system for constructing a 3D watch object from a watch image is described followed by a discussion of the operation of the components within the system. FIG. 1 is a block diagram of a computing device 102 in which the embodiments disclosed herein may be implemented. The computing device 102 may comprise one or more processors that execute machine executable instructions to perform the features described herein. For example, the computing device 102 may be embodied as a computing device such as, but not limited to, a smartphone, a tablet-computing device, a laptop, and so on.

A watch design application 104 executes on a processor of the computing device 102 and includes an image processor 106, a segmentation mask module 108, a 3D mesh generator 110, a texture processor 112, and an image editor 114. The image processor 106 is configured to obtain digital images of a 2D watch design of interest using, for example, a camera of the computing device 102. The computing device 102 may also be equipped with the capability to connect to the Internet, and the image processor 106 may be configured to obtain an image or video of a watch design from another device or server.

The images obtained by the image processor 106 may be encoded in any of a number of formats including, but not limited to, JPEG (Joint Photographic Experts Group) files, TIFF (Tagged Image File Format) files, PNG (Portable Network Graphics) files, GIF (Graphics Interchange Format) files, BMP (bitmap) files or any number of other digital formats. The video may be encoded in formats including, but not limited to, Motion Picture Experts Group (MPEG)-1, MPEG-2, MPEG-4, H.264, Third Generation Partnership Project (3GPP), 3GPP-2, Standard-Definition Video (SD-Video), High-Definition Video (HD-Video), Digital Versatile Disc (DVD) multimedia, Video Compact Disc (VCD) multimedia, High-Definition Digital Versatile Disc (HD-DVD) multimedia, Digital Television Video / High-definition Digital Television (DTV/HDTV) multimedia, Audio Video Interleave (AVI), Digital Video (DV), QuickTime (QT) file, Windows Media Video (WMV), Advanced System Format (ASF), Real Media (RM), Flash Media (FLV), an MPEG Audio Layer III (MP3), an MPEG Audio Layer II (MP2), Waveform Audio Format (WAV), Windows Media Audio (WMA), 360 degree video, 3D scan model, or any number of other digital formats.

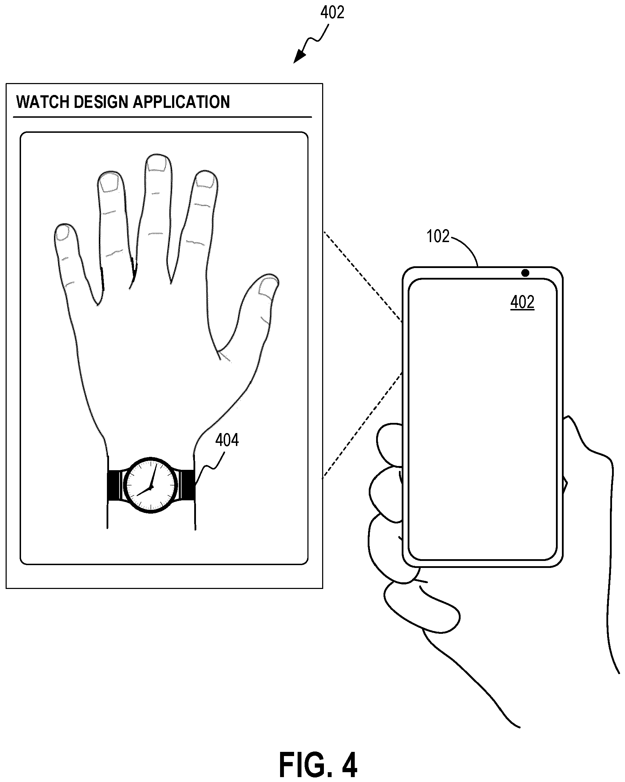

FIG. 4 illustrates an example user interface 402 provided on a display of the computing device 102 whereby a 2D image of a watch design 404 is obtained and displayed to the user. For some implementations, the image processor 106 (FIG. 1) executing in the computing device 102 may be configured to cause a camera of the computing device 102 to capture an image or a video of a watch design of interest for purposes of generating a 3D model of the watch design. As discussed earlier, the computing device 102 may also be equipped with the capability to connect to the Internet, and the image processor 106 may be configured to obtain an image or video of the user from another device or server, where the image may comprise, for example, an advertisement for a particular watch.

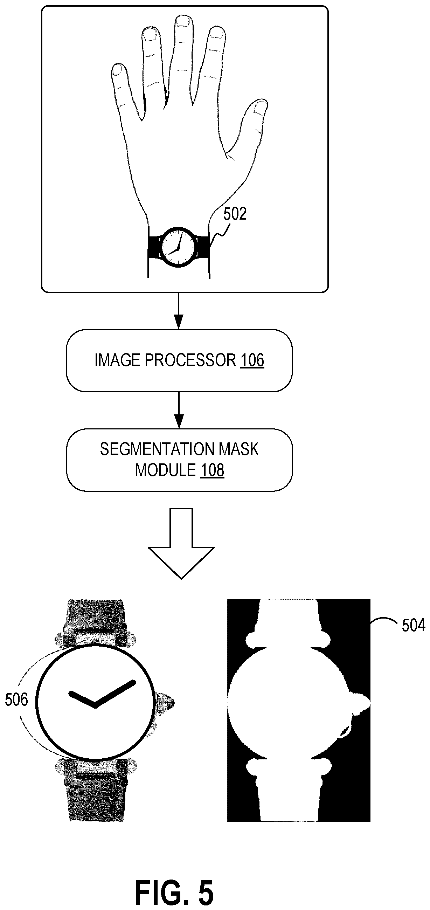

Referring back to the system block diagram in FIG. 1, the segmentation mask module 108 is executed by the processor of the computing device 102 to perform segmentation on the watch to identify the boundary of the watch depicted in the image. FIG. 5 illustrates an example of a segmentation mask 504 generated by the segmentation mask module 108 from an image of a watch design 502 obtained by the image processor 106. The segmented watch region comprises a watch case region, a first watch strap region, and a second watch strap region. For some embodiments, the segmentation mask module 108 is configured to perform segmentation on the watch in the image using one a machine learning method, an image processing method, or a user specified method.

Referring back to the system block diagram in FIG. 1, the 3D mesh generator 110 is configured to generate a 3D mesh according to the watch case region, the first watch strap region, the second watch strap region, and a pre-defined skeleton containing at least one straight part and at least two curved parts. For some embodiments, the 3D mesh generator 110 is configured to generate multiple anchor points in the segmented image. The anchor points define the boundaries between the watch case region, the first watch strap region, and the second watch strap region of the watch depicted in the image. FIG. 5 illustrates the designation of anchor points 506 on the watch design 502. The 3D mesh generator 110 is further configured to generate a 3D mesh according to the watch design through the use of various intermediate 3D meshes, as now described.

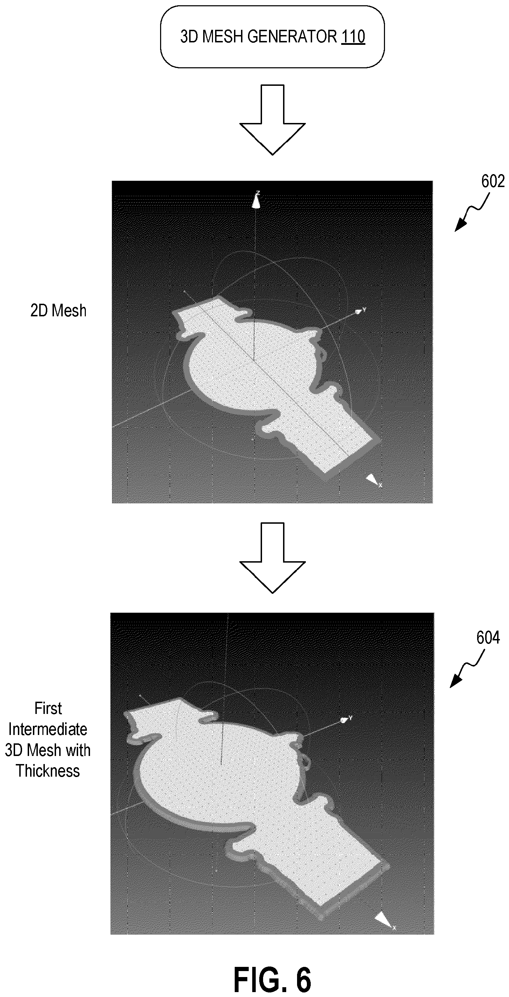

Reference is made to FIG. 6, which illustrates generation of a first intermediate 3D mesh. For some embodiments, the 3D mesh generator 110 is configured to generate a 2D mesh 602 according to the segmentation operation performed on the image depicting the watch. The 3D mesh generator 110 then adjusts depth values of the 2D mesh to generate a first intermediate 3D mesh having thickness 604.

For some embodiments, the depth values of the 2D mesh are adjusted to generate the first intermediate 3D mesh by transforming the 2D mesh onto a plane perpendicular to a z-axis in a 3D coordinate system to generate the first intermediate 3D mesh with all vertices initially having a same z value along the z-axis. In particular, each vertex (a, b) of the 2D mesh will be mapped to a corresponding vertex (a, b, 0) in the 3D coordinate system. The z-coordinate of each vertex of the first intermediate 3D mesh is adjusted according to a distance between each vertex and a closest edge. In particular, the z-coordinate is adjusted according to an inverse relationship with respect to the distance between each vertex and the closest edge such that the z-coordinate is adjusted to a greater extent as the distance between each vertex and the closest edge decreases. For some embodiments, a threshold is utilized to determine which vertices of the first intermediate 3D mesh should be adjusted. For each vertex, if the distance between the vertex and the edge is less than the threshold, the z-coordinate of that vertex will be adjusted. The smaller the distance between the vertex and the edge, the more the z-coordinate of the vertex is adjusted. The adjusted vertices will appear as a curve from the side, where the adjusted mesh comprises a curved 3D mesh.

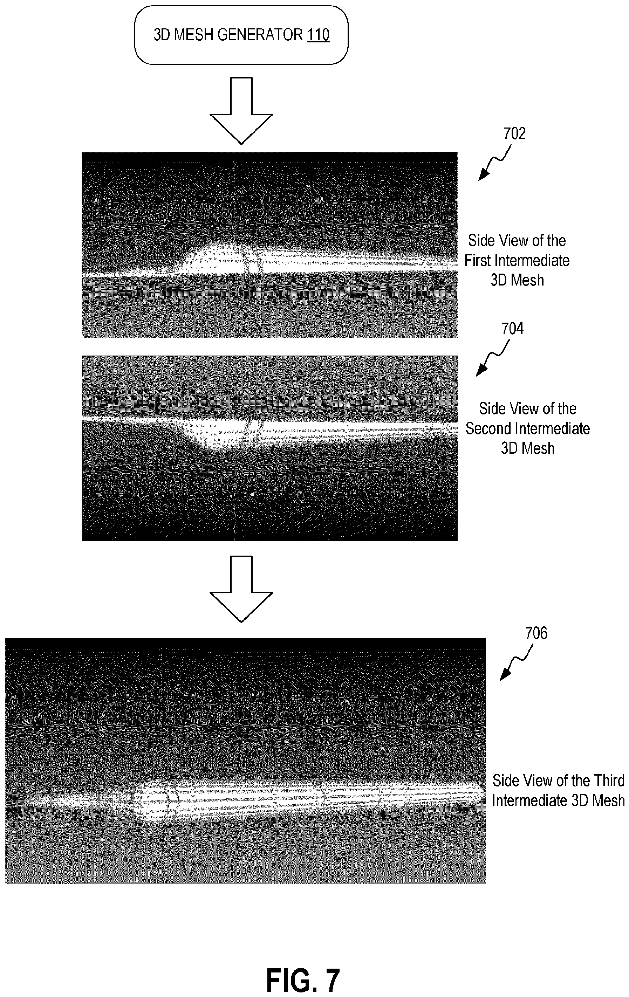

Referring now to FIG. 7, the 3D mesh generator 110 is configured to generate the 3D mesh according to the watch case region, the first watch strap region, the second watch strap region, and the pre-defined skeleton by generating a 2D mesh comprising a watch case sub-mesh of the 2D mesh, a first watch strap sub-mesh of the 2D mesh, and a second watch strap sub-mesh of the 2D mesh according to the watch case region, the first watch strap region, and the second watch strap region. The 3D mesh generator 110 adjusts the depth values of the 2D mesh to generate a first intermediate 3D mesh 702 comprising a watch case sub-mesh of the first intermediate 3D mesh, a first watch strap sub-mesh of the first intermediate 3D mesh, and a second watch strap sub-mesh of the first intermediate 3D mesh. The 3D mesh generator 110 duplicates and inverts the first intermediate 3D mesh to generate a second intermediate 3D mesh 704 comprising a watch case sub-mesh of the second intermediate 3D mesh, a first watch strap sub-mesh of the second intermediate 3D mesh, and a second watch strap sub-mesh of the second intermediate 3D mesh. The 3D mesh generator 110 then merges the first intermediate 3D mesh 702 with the second intermediate 3D mesh 704 to generate a third intermediate 3D mesh 706 comprising a watch case sub-mesh of the third intermediate 3D mesh, a first watch strap sub-mesh of the third intermediate 3D mesh, and a second watch strap sub-mesh of the third intermediate 3D mesh. FIG. 7 shows side views of the first, second, and third intermediate 3D meshes 702, 704, 706.

For some embodiments, the 3D mesh generator 110 is configured to adjust the depth values of the 2D mesh to generate the first intermediate 3D mesh by generating a 2D edge point set of the segmented watch region. The 3D mesh generator 110 transforms the 2D mesh and the 2D edge point set onto a plane perpendicular to a z-axis in a 3D coordinate system to generate the first intermediate 3D mesh and a 3D edge point set, wherein all vertices of the first intermediate 3D mesh and all points of the 3D edge point set initially having a same z-value along the z-axis. The 3D mesh generator 110 then adjusts the z-value of each vertex of the first intermediate 3D mesh according to a distance between each vertex and a closest point in the 3D edge point set. In particular, the z-value is adjusted according to an inverse relationship with respect to the distance between each vertex and the closest point on an edge of the 3D edge point set such that the z-value is adjusted to a greater extent as the distance between each vertex and the closest point on the edge decreases. The pre-defined skeleton is defined on an x-z plane.

The 3D mesh generator 110 applies the warping operation to the third intermediate 3D mesh according to the pre-defined skeleton to generate the 3D mesh by adjusting the watch case sub-mesh of the third intermediate 3D mesh to be a watch case sub-mesh of a fourth intermediate 3D mesh so that a projection of the watch case sub-mesh of the fourth intermediate 3D mesh onto the x-z plane approximates the one straight part of the pre-defined skeleton. The 3D mesh generator 110 adjusts the first watch strap sub-mesh of the third intermediate 3D mesh to be a first watch strap sub-mesh of the fourth intermediate 3D mesh so that the projection of the first watch strap sub-mesh of the fourth intermediate 3D mesh onto the x-z plane approximates one of the curved parts of the pre-defined skeleton. The 3D mesh generator 110 adjusts the second watch strap sub-mesh of the third intermediate 3D mesh to be a second watch strap sub-mesh of the fourth intermediate 3D mesh so that the projection of the second watch strap sub-mesh of the fourth intermediate 3D mesh onto the x-z plane approximates one of the curved parts of the pre-defined skeleton. The 3D mesh generator 110 then defines the fourth intermediate 3D mesh as the 3D mesh.

For some embodiments, the 3D mesh generator 110 generates the 3D mesh according to the watch case region, the first watch strap region, the second watch strap region, and the pre-defined skeleton containing the at least one straight part and the at least two curved parts by defining a watch case sub-mesh of the 3D mesh, a first watch strap sub-mesh of the 3D mesh, and a second watch strap sub-mesh of the 3D mesh according to the watch case region, the first watch strap region, and the second watch strap region. The 3D mesh generator 110 adjusts the thickness values of the watch case sub-mesh of the 3D mesh to be greater than thickness values of the first watch strap sub-mesh of the 3D mesh and the second watch strap sub-mesh of the 3D mesh. The 3D mesh generator 110 adjusts the thickness values of the 3D mesh to incorporate a thickness transition around a first j oint of the watch case sub-mesh of the 3D mesh and the first watch strap sub-mesh of the 3D mesh. The 3D mesh generator 110 also adjusts the thickness values of the 3D mesh to incorporate a thickness transition around a second joint of the watch case sub-mesh of the 3D mesh and the second watch strap sub-mesh of the 3D mesh.

For some embodiments, the 3D mesh generator 110 generates the 3D mesh according to the watch case region, the first watch strap region, the second watch strap region, and the pre-defined skeleton containing the at least one straight part and the at least two curved parts by generating a first 2D mesh comprising a watch case sub-mesh of the first 2D mesh, a first watch strap sub-mesh of the first 2D mesh, and a second watch strap sub-mesh of the first 2D mesh according to the watch case region, the first watch strap region and the second watch strap region. The 3D mesh generator 110 duplicates the first 2D mesh to generate a second 2D mesh comprising a watch case sub-mesh of the second 2D mesh, a first watch strap sub-mesh of the second 2D mesh, and a second watch strap sub-mesh of the second 2D mesh. The 3D mesh generator 110 adjusts the depth values of the first 2D mesh to generate a first intermediate 3D mesh comprising a watch case sub-mesh of the first intermediate 3D mesh, a first watch strap sub-mesh of the first intermediate 3D mesh, and a second watch strap sub-mesh of the first intermediate 3D mesh. The 3D mesh generator 110 adjusts depth values of the second 2D mesh to generate a second intermediate 3D mesh comprising a watch case sub-mesh of the second intermediate 3D mesh, a first watch strap sub-mesh of the second intermediate 3D mesh, and a second watch strap sub-mesh of the second intermediate 3D mesh. The 3D mesh generator 110 then merges the first intermediate 3D mesh with the second intermediate 3D mesh to generate a third intermediate 3D mesh comprising a watch case sub-mesh of the third intermediate 3D mesh, a first watch strap sub-mesh of the third intermediate 3D mesh, and a second watch strap sub-mesh of the third intermediate 3D mesh. The 3D mesh generator 110 then applies a warping operation to the third intermediate 3D mesh according to the pre-defined skeleton to generate the 3D mesh.

For some embodiments, the 3D mesh generator 110 applies a warping operation to the third intermediate 3D mesh according to the pre-defined skeleton to generate the 3D mesh by adjusting the watch case sub-mesh of the third intermediate 3D mesh to be a watch case sub-mesh of a fourth intermediate 3D mesh so that a projection of the watch case sub-mesh of the fourth intermediate 3D mesh onto the x-z plane approximates the one straight part of the pre-defined skeleton.

The 3D mesh generator 110 adjusts the first watch strap sub-mesh of the third intermediate 3D mesh to be a first watch strap sub-mesh of the fourth intermediate 3D mesh so that the projection of the first watch strap sub-mesh of the fourth intermediate 3D mesh onto the x-z plane approximates one of the curved parts of the pre-defined skeleton. The 3D mesh generator 110 adjusts the second watch strap sub-mesh of the third intermediate 3D mesh to be a second watch strap sub-mesh of the fourth intermediate 3D mesh so that the projection of the second watch strap sub-mesh of the fourth intermediate 3D mesh onto the x-z plane approximates one of the curved parts of the pre-defined skeleton. The 3D mesh generator 110 then defines the fourth intermediate 3D mesh as the 3D mesh.

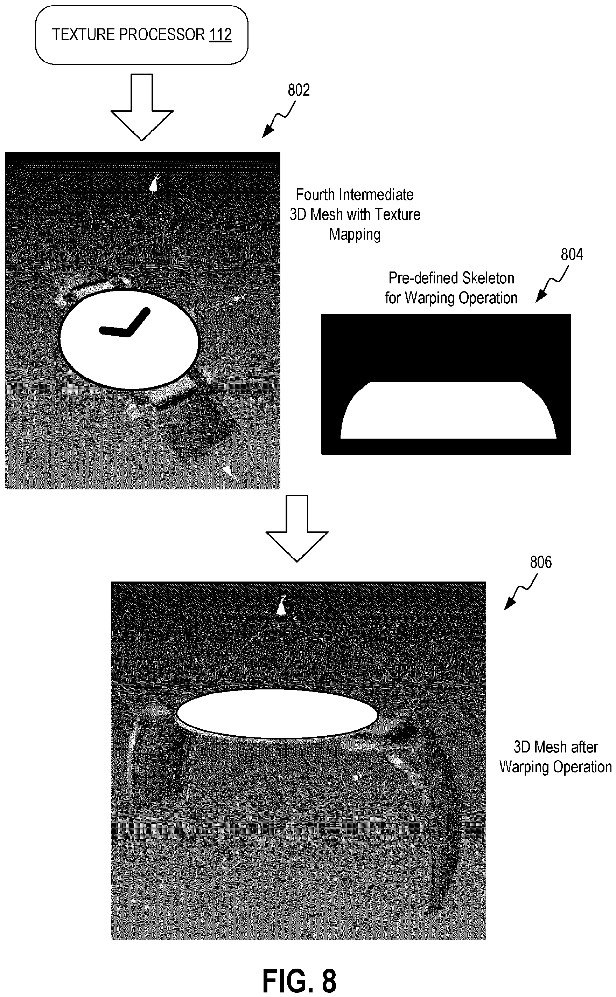

FIG. 8 illustrates the 3D mesh generator 110 applying a warping operation to the third intermediate 3D mesh according to the pre-defined skeleton to generate the 3D mesh. For some embodiments, the 3D mesh generator 110 adjusts thickness values of the third intermediate 3D mesh according to the anchor points to generate a fourth intermediate 3D mesh 802. The 3D mesh generator 110 then applies a warping operation to the fourth intermediate 3D mesh 802 according to the anchor points and a pre-defined skeleton 804 to generate the 3D mesh 806. The pre-defined skeleton may be defined according to a quadratic curve and generally models the curvature of the user's wrist for purposes of later rendering the 3D watch object on the user's wrist. The skeleton can be adjusted as needed to provide a more accurate depiction of the 3D watch object being worn by the user.

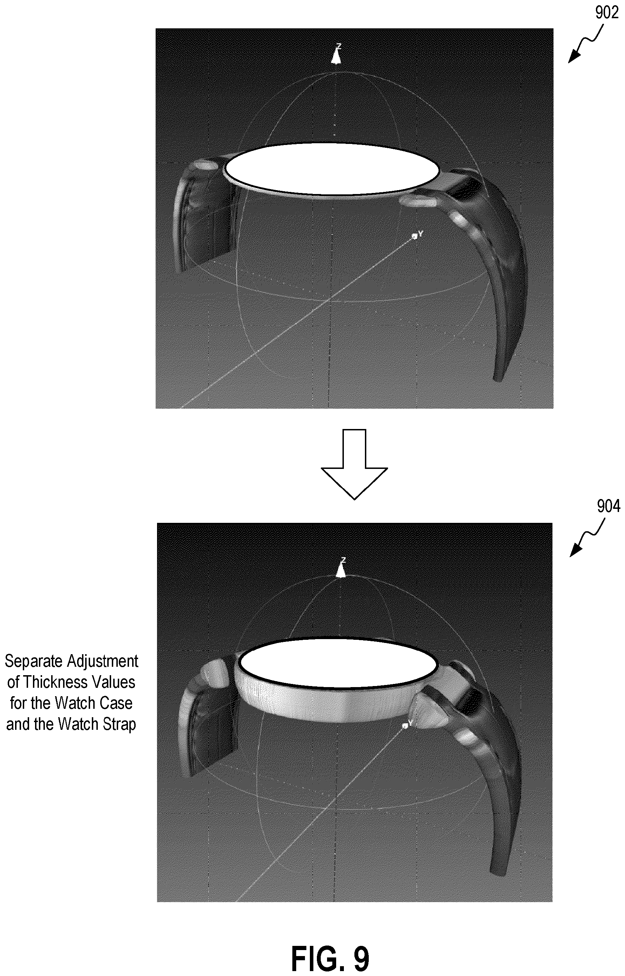

Referring back to the system block diagram in FIG. 1, the texture processor 112 is configured to generate texture attributes of the watch depicted in the image and apply the texture attributes to the 3D mesh to generate a textured 3D watch object. The texture attributes may comprise, for example, an albedo texture or a normal texture. The texture attributes may be generated according to the watch case region, the first watch strap region, or the second watch strap region. FIG. 9 further illustrates the warping operation. For some embodiments, the thickness values of the watch case and the watch strap are separately adjusted. The 3D mesh generator 110 typically adjusts the thickness of the watch to be greater than the thickness of the watch strap.

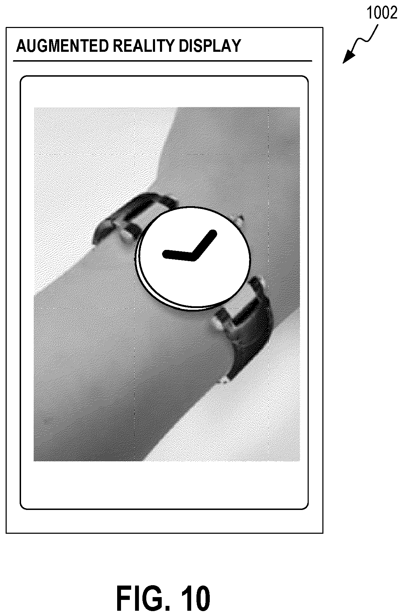

The image editor 114 in FIG. 1 is configured to render the textured 3D watch object in an augmented reality display for evaluation of the watch depicted in the image. FIG. 10 illustrates an example user interface 1002 where the textured 3D watch object is shown being worn by the user. For some embodiments, the image editor 114 is configured to obtain a second image depicting a wrist of the user and determine a pose of the wrist in the second image. The image editor 114 determines a pose of the wrist in the second image and obtains at least one control point of the textured 3D watch object. The control point may comprises, for example, the center of the watch for aligning to the displacement of wrist pose. The control point may also comprise the center of the watch case for aligning to the roll rotation of wrist pose.

The image editor 114 then renders the textured 3D watch object on the wrist depicted in the second image according to the pose of the wrist and the at least one control point of the textured 3D watch object. For some embodiments, the image editor 114 is configured to render the textured 3D watch object while capturing live video of the user. For example, the user may utilize a camera of the computing device 102 to capture a video of the user's wrist. The image editor 114 then renders the textured 3D watch object on the user's wrist depicted in the video.

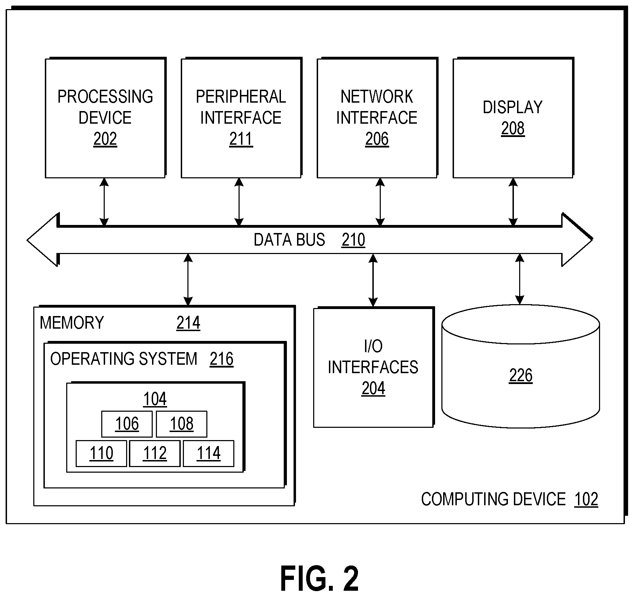

FIG. 2 illustrates a schematic block diagram of the computing device 102 in FIG. 1. The computing device 102 may be embodied as a desktop computer, portable computer, dedicated server computer, multiprocessor computing device, smart phone, tablet, and so forth. As shown in FIG. 2, the computing device 102 comprises memory 214, a processing device 202, a number of input/output interfaces 204, a network interface 206, a display 208, a peripheral interface 211, and mass storage 226, wherein each of these components are connected across a local data bus 210.

The processing device 202 may include a custom made processor, a central processing unit (CPU), or an auxiliary processor among several processors associated with the computing device 102, a semiconductor based microprocessor (in the form of a microchip), a macroprocessor, one or more application specific integrated circuits (ASICs), a plurality of suitably configured digital logic gates, and so forth.

The memory 214 may include one or a combination of volatile memory elements (*e.g*., random-access memory (RAM) such as DRAM and SRAM) and nonvolatile memory elements (*e.g*., ROM, hard drive, tape, CDROM). The memory 214 typically comprises a native operating system 216, one or more native applications, emulation systems, or emulated applications for any of a variety of operating systems and/or emulated hardware platforms, emulated operating systems, *etc.* For example, the applications may include application specific software that may comprise some or all the components of the computing device 102 displayed in FIG. 1.

In accordance with such embodiments, the components are stored in memory 214 and executed by the processing device 202, thereby causing the processing device 202 to perform the operations/functions disclosed herein. For some embodiments, the components in the computing device 102 may be implemented by hardware and/or software.

Input/output interfaces 204 provide interfaces for the input and output of data. For example, where the computing device 102 comprises a personal computer, these components may interface with one or more input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

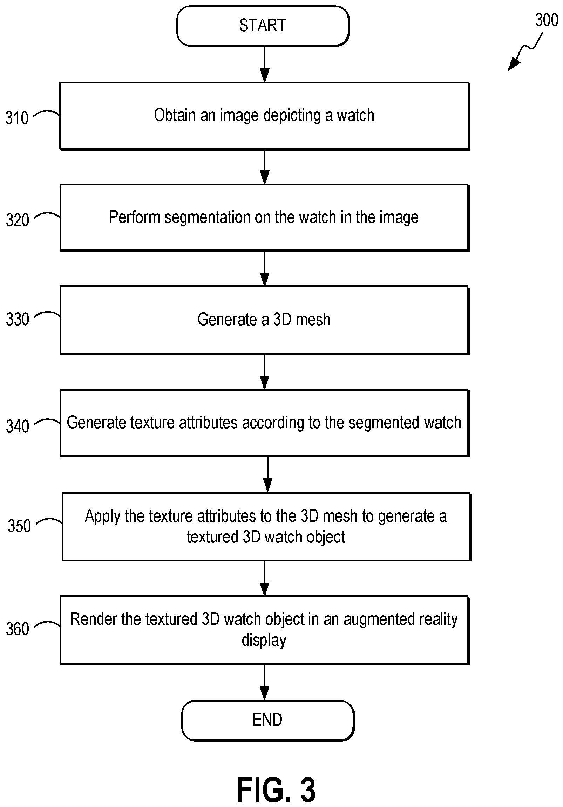

Reference is made to FIG. 3, which is a flowchart 300 in accordance with various embodiments for constructing a 3D watch object from a watch image, where the operations are performed by the computing device 102 of FIG. 1. It is understood that the flowchart 300 of FIG. 3 provides merely an example of the different types of functional arrangements that may be employed to implement the operation of the various components of the computing device 102. As an alternative, the flowchart 300 of FIG. 3 may be viewed as depicting an example of steps of a method implemented in the computing device 102 according to one or more embodiments.

Although the flowchart 300 of FIG. 3 shows a specific order of execution, it is understood that the order of execution may differ from that which is displayed. For example, the order of execution of two or more blocks may be scrambled relative to the order shown. In addition, two or more blocks shown in succession in FIG. 3 may be executed concurrently or with partial concurrence. It is understood that all such variations are within the scope of the present disclosure.

At block 310, the computing device 102 obtains an image depicting a watch. At block 320, the computing device 102 performs segmentation on the watch in the image to generate a segmented watch region comprising a watch case region, a first watch strap region, and a second watch strap region. For some embodiments, the computing device 102 performs segmentation using a machine learning method, an image processing method, or a user specified method.

At block 330, the computing device 102 generates a 3D mesh according to the watch case region, the first watch strap region, the second watch strap region, and a pre-defined skeleton containing at least one straight part and at least two curved parts. For some embodiments, the computing device 102 generates the 3D mesh by defining a watch case sub-mesh of the 3D mesh, a first watch strap sub-mesh of the 3D mesh, and a second watch strap sub-mesh of the 3D mesh according to the watch case region, the first watch strap region, and the second watch strap region. The computing device 102 adjusts thickness values of the watch case sub-mesh of the 3D mesh to be greater than thickness values of the first watch strap sub-mesh of the 3D mesh and the second watch strap sub-mesh of the 3D mesh. The computing device 102 also adjusts thickness values of the 3D mesh to incorporate a thickness transition around a first j oint of the watch case sub-mesh of the 3D mesh and the first watch strap sub-mesh of the 3D mesh. The computing device 102 further adjusts thickness values of the 3D mesh to incorporate a thickness transition around a second joint of the watch case sub-mesh of the 3D mesh and the second watch strap sub-mesh of the 3D mesh.

For other embodiments, the computing device 102 generates the 3D mesh by generating a first 2D mesh comprising a watch case sub-mesh of the first 2D mesh, a first watch strap sub-mesh of the first 2D mesh, and a second watch strap sub-mesh of the first 2D mesh according to the watch case region, the first watch strap region and the second watch strap region. The computing device 102 duplicates the first 2D mesh to generate a second 2D mesh comprising a watch case sub-mesh of the second 2D mesh, a first watch strap sub-mesh of the second 2D mesh, and a second watch strap sub-mesh of the second 2D mesh. The computing device 102 adjusts depth values of the first 2D mesh to generate a first intermediate 3D mesh comprising a watch case sub-mesh of the first intermediate 3D mesh, a first watch strap sub-mesh of the first intermediate 3D mesh, and a second watch strap sub-mesh of the first intermediate 3D mesh. The computing device 102 also adjusts depth values of the second 2D mesh to generate a second intermediate 3D mesh comprising a watch case sub-mesh of the second intermediate 3D mesh, a first watch strap sub-mesh of the second intermediate 3D mesh, and a second watch strap sub-mesh of the second intermediate 3D mesh. The computing device 102 then merges the first intermediate 3D mesh with the second intermediate 3D mesh to generate a third intermediate 3D mesh comprising a watch case sub-mesh of the third intermediate 3D mesh, a first watch strap sub-mesh of the third intermediate 3D mesh, and a second watch strap sub-mesh of the third intermediate 3D mesh. The computing device 102 then applies a warping operation to the third intermediate 3D mesh according to the pre-defined skeleton to generate the 3D mesh.

For some embodiments, the computing device 102 generates a 3D mesh according to the watch, the plurality of anchor points, and a pre-defined skeleton. The pre-defined skeleton may be defined according to a quadratic curve. As discussed earlier, the pre-defined skeleton models the curvature of the user's wrist for purposes of later rendering the 3D watch object onto the user's wrist. For some embodiments, the computing device 102 generates the 3D mesh by generating a 2D mesh according to the watch and adjusting the depth values of the 2D mesh to generate a first intermediate 3D mesh. The computing device 102 generates a second intermediate 3D mesh that comprises an inverted duplicate of the first intermediate 3D mesh. The first intermediate 3D mesh is merged with the second intermediate 3D mesh to generate a third intermediate 3D mesh.

The computing device 102 adjusts the thickness values of the third intermediate 3D mesh according to the anchor points to generate a fourth intermediate 3D mesh. The thickness values associated with the watch case are generally adjusted to be greater than thickness values associated with the watch strap. A warping operation is performed on the fourth intermediate 3D mesh according to the plurality of anchor points and the pre-defined skeleton to generate the 3D mesh.

For other embodiments, the computing device 102 generates the 3D mesh by generating a first 2D mesh according to the segmented watch region and generates a second 2D mesh comprising a duplicate of the first 2D mesh. The computing device 102 adjusts depth values of the first 2D mesh to generate a first intermediate 3D mesh and adjusts depth values of the second 2D mesh to generate a second intermediate 3D mesh. The first intermediate 3D mesh is then merged with the second intermediate 3D mesh to generate a third intermediate 3D mesh.

As an alternative to generating a second 2D mesh comprising a duplicate of the first 2D mesh, the computing device 102 duplicates and inverts the first intermediate 3D mesh to generate a second intermediate 3D mesh comprising a watch case sub-mesh of the second intermediate 3D mesh, a first watch strap sub-mesh of the second intermediate 3D mesh, and a second watch strap sub-mesh of the second intermediate 3D mesh. The first intermediate 3D mesh is merged with the second intermediate 3D mesh to generate the third intermediate 3D mesh.

The computing device 102 adjusts thickness values of the third intermediate 3D mesh according to the various anchor points to generate a fourth intermediate 3D mesh. A warping operation is applied to the fourth intermediate 3D mesh according to the anchor points and the pre-defined skeleton to generate the 3D mesh.

The depth values of the first 2D mesh are adjusted to generate the first intermediate 3D mesh by transforming the first 2D mesh onto a plane perpendicular to a z-axis in a 3D coordinate system to generate the first intermediate 3D mesh with all vertices initially having a same z value along the z-axis. In particular, each vertex (a, b) of the first 2D mesh will be mapped to a corresponding vertex (a, b, 0) in the 3D coordinate system. The z-coordinate of each vertex of the first intermediate 3D mesh is adjusted according to a distance between each vertex and a closest edge. In particular, the z-coordinate is adjusted according to an inverse relationship with respect to the distance between each vertex and the closest edge such that the z-coordinate is adjusted to a greater extent as the distance between each vertex and the closest edge decreases. For some embodiments, a threshold is utilized to determine which vertices of the first intermediate 3D mesh should be adjusted. For each vertex, if the distance between the vertex and the edge is less than the threshold, the z-coordinate of that vertex will be adjusted. The adjusted vertices will appear as a curve from the side, where the first adjusted mesh comprises a curved 3D mesh.

The depth values of the second 2D mesh are adjusted to generate the second intermediate 3D mesh using the same steps as those used for generating the first intermediate 3D mesh except that the z-coordinate adjustment for each vertex is in the opposite direction to the adjustment of the first intermediate 3D mesh. The first and second intermediate 3D meshes are merged to generate the third intermediate 3D mesh by applying a constant translation to either one of the intermediate 3D meshes or to both of the intermediate 3D meshes to align the vertices at the edges of the first and the second intermediate 3D meshes.

At block 340, the computing device 102 generates texture attributes according to the segmented watch. The texture attributes may comprise, for example, an albedo texture or a normal texture. The texture attributes may be generated according to the watch case region, the first watch strap region, or the second watch strap region. At block 350, the computing device 102 applies the texture attributes to the 3D mesh to generate a textured 3D watch object.

At block 360, the computing device 102 renders the textured 3D watch object in an augmented reality display. For some embodiments, the computing device 102 renders the textured 3D watch object in the augmented reality display by obtaining a second image depicting a wrist and determining a pose of the wrist in the second image. The computing device 102 obtains at least one control point of the textured 3D watch object and renders the textured 3D watch object on the wrist in the second image according to the pose of the wrist and the at least one control point of the textured 3D watch object. Thereafter, the process in FIG. 3 ends.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are included herein within the scope of this disclosure and protected by the following claims.

## Claims

1. A method implemented in a computing device, comprising:
obtaining an image depicting a watch;
performing segmentation on the watch in the image to generate a segmented watch region comprising a watch case region, a first watch strap region, and a second watch strap region;
generating a three-dimensional (3D) mesh according to the watch case region, the first watch strap region, the second watch strap region, and a pre-defined skeleton containing at least one straight part and at least two curved parts;
generating texture attributes according to the segmented watch;
applying the texture attributes to the 3D mesh to generate a textured 3D watch object; and
rendering the textured 3D watch object in an augmented reality display.

2. The method of claim 1, wherein performing segmentation on the watch in the image to generate the segmented watch region comprising the watch case region, the first watch strap region, and the second watch strap region is performed using one of: a machine learning method, an image processing method, or a user specified method.

3. The method of claim 1, wherein rendering the textured 3D watch object in the augmented reality display comprises:
obtaining a second image depicting a wrist;
determining a pose of the wrist in the second image;
obtaining at least one control point of the textured 3D watch object; and
rendering the textured 3D watch object on the wrist in the second image according to the pose of the wrist and the at least one control point of the textured 3D watch object.

4. The method of claim 1, wherein generating the 3D mesh according to the watch case region, the first watch strap region, the second watch strap region, and the pre-defined skeleton containing the at least one straight part and the at least two curved parts comprises:
generating a two-dimensional (2D) mesh comprising a watch case sub-mesh of the 2D mesh, a first watch strap sub-mesh of the 2D mesh, and a second watch strap sub-mesh of the 2D mesh according to the watch case region, the first watch strap region, and the second watch strap region;
adjusting depth values of the 2D mesh to generate a first intermediate 3D mesh comprising a watch case sub-mesh of the first intermediate 3D mesh, a first watch strap sub-mesh of the first intermediate 3D mesh, and a second watch strap sub-mesh of the first intermediate 3D mesh;
duplicating and inverting the first intermediate 3D mesh to generate a second intermediate 3D mesh comprising a watch case sub-mesh of the second intermediate 3D mesh, a first watch strap sub-mesh of the second intermediate 3D mesh, and a second watch strap sub-mesh of the second intermediate 3D mesh;
merging the first intermediate 3D mesh with the second intermediate 3D mesh to generate a third intermediate 3D mesh comprising a watch case sub-mesh of the third intermediate 3D mesh, a first watch strap sub-mesh of the third intermediate 3D mesh, and a second watch strap sub-mesh of the third intermediate 3D mesh; and
applying a warping operation to the third intermediate 3D mesh according to the pre-defined skeleton to generate the 3D mesh.

5. The method of claim 4, wherein adjusting depth values of the 2D mesh to generate the first intermediate 3D mesh comprising the watch case sub-mesh of the first intermediate 3D mesh, the first watch strap sub-mesh of the first intermediate 3D mesh, and the second watch strap sub-mesh of the first intermediate 3D mesh comprises:
generating a 2D edge point set of the segmented watch region;
transforming the 2D mesh and the 2D edge point set onto a plane perpendicular to a z-axis in a 3D coordinate system to generate the first intermediate 3D mesh and a 3D edge point set, wherein all vertices of the first intermediate 3D mesh and all points of the 3D edge point set initially having a same z-value along the z-axis; and
adjusting a z-value of each vertex of the first intermediate 3D mesh according to a distance between each vertex and a closest point in the 3D edge point set, wherein the z-value is adjusted according to an inverse relationship with respect to the distance between each vertex and the closest point in the 3D edge point set such that the z-value is adjusted to a greater extent as the distance between each vertex and the closest point in the 3D edge point set decreases.

6. The method of claim 4, wherein adjusting depth values of the 2D mesh to generate the first intermediate 3D mesh comprising the watch case sub-mesh of the first intermediate 3D mesh, the first watch strap sub-mesh of the first intermediate 3D mesh, and the second watch strap sub-mesh of the first intermediate 3D mesh comprises:
generating a 2D edge point set of the segmented watch region;
transforming the 2D mesh and the 2D edge point set onto a plane perpendicular to a z-axis in a 3D coordinate system to generate the first intermediate 3D mesh and a 3D edge point set, wherein all vertices of the first intermediate 3D mesh and all points of the 3D edge point set initially having a same z-value along the z-axis; and
adjusting a z-value of each vertex of the first intermediate 3D mesh according to a distance between each vertex and a closest point in the 3D edge point set, wherein the z-value is adjusted according to an inverse relationship with respect to the distance between each vertex and the closest point on an edge in the 3D edge point set such that the z-value is adjusted to a greater extent as the distance between each vertex and the closest point on the edge decreases;
wherein the pre-defined skeleton is defined on an x-z plane;
wherein applying the warping operation to the third intermediate 3D mesh according to the pre-defined skeleton to generate the 3D mesh comprises:
adjusting the watch case sub-mesh of the third intermediate 3D mesh to be a watch case sub-mesh of a fourth intermediate 3D mesh so that a projection of the watch case sub-mesh of the fourth intermediate 3D mesh onto the x-z plane approximates the one straight part of the pre-defined skeleton;
adjusting the first watch strap sub-mesh of the third intermediate 3D mesh to be a first watch strap sub-mesh of the fourth intermediate 3D mesh so that the projection of the first watch strap sub-mesh of the fourth intermediate 3D mesh onto the x-z plane approximates one of the curved parts of the pre-defined skeleton;
adjusting the second watch strap sub-mesh of the third intermediate 3D mesh to be a second watch strap sub-mesh of the fourth intermediate 3D mesh so that the projection of the second watch strap sub-mesh of the fourth intermediate 3D mesh onto the x-z plane approximates one of the curved parts of the pre-defined skeleton; and
defining the fourth intermediate 3D mesh as the 3D mesh.

7. The method of claim 1, generating the 3D mesh according to the watch case region, the first watch strap region, the second watch strap region, and the pre-defined skeleton containing the at least one straight part and the at least two curved parts comprises:
defining a watch case sub-mesh of the 3D mesh, a first watch strap sub-mesh of the 3D mesh, and a second watch strap sub-mesh of the 3D mesh according to the watch case region, the first watch strap region, and the second watch strap region;
adjusting thickness values of the watch case sub-mesh of the 3D mesh to be greater than thickness values of the first watch strap sub-mesh of the 3D mesh and the second watch strap sub-mesh of the 3D mesh;
adjusting thickness values of the 3D mesh to incorporate a thickness transition around a first j oint of the watch case sub-mesh of the 3D mesh and the first watch strap sub-mesh of the 3D mesh; and
adjusting thickness values of the 3D mesh to incorporate a thickness transition around a second joint of the watch case sub-mesh of the 3D mesh and the second watch strap sub-mesh of the 3D mesh.

8. The method of claim 1, wherein generating the 3D mesh according to the watch case region, the first watch strap region, the second watch strap region, and a pre-defined skeleton containing at least one straight part and at least two curved parts comprises:
generating a first two-dimensional (2D) mesh comprising a watch case sub-mesh of the first 2D mesh, a first watch strap sub-mesh of the first 2D mesh, and a second watch strap sub-mesh of the first 2D mesh according to the watch case region, the first watch strap region and the second watch strap region;
duplicating the first 2D mesh to generate a second 2D mesh comprising a watch case sub-mesh of the second 2D mesh, a first watch strap sub-mesh of the second 2D mesh, and a second watch strap sub-mesh of the second 2D mesh;
adjusting depth values of the first 2D mesh to generate a first intermediate 3D mesh comprising a watch case sub-mesh of the first intermediate 3D mesh, a first watch strap sub-mesh of the first intermediate 3D mesh, and a second watch strap sub-mesh of the first intermediate 3D mesh;
adjusting depth values of the second 2D mesh to generate a second intermediate 3D mesh comprising a watch case sub-mesh of the second intermediate 3D mesh, a first watch strap sub-mesh of the second intermediate 3D mesh, and a second watch strap sub-mesh of the second intermediate 3D mesh;
merging the first intermediate 3D mesh with the second intermediate 3D mesh to generate a third intermediate 3D mesh comprising a watch case sub-mesh of the third intermediate 3D mesh, a first watch strap sub-mesh of the third intermediate 3D mesh, and a second watch strap sub-mesh of the third intermediate 3D mesh; and
applying a warping operation to the third intermediate 3D mesh according to the pre-defined skeleton to generate the 3D mesh.

9. The method of claim 1, wherein the texture attributes comprise one of: an albedo texture, a roughness texture, or a normal texture, and
wherein the texture attributes are generated according to one of: the watch case region, the first watch strap region, or the second watch strap region.

10. A system, comprising:
a memory storing instructions;
a processor coupled to the memory and configured by the instructions to at least:
obtain an image depicting a watch;
perform segmentation on the watch in the image to generate a segmented watch region comprising a watch case region, a first watch strap region, and a second watch strap region;
generate a three-dimensional (3D) mesh according to the watch case region, the first watch strap region, the second watch strap region, and a pre-defined skeleton containing at least one straight part and at least two curved parts;
generate texture attributes according to the segmented watch;
apply the texture attributes to the 3D mesh to generate a textured 3D watch object; and
render the textured 3D watch object in an augmented reality display.

11. The system of claim 10, wherein the processor is configured to perform segmentation on the watch in the image to generate the segmented watch region comprising the watch case region, the first watch strap region, and the second watch strap region using one of: a machine learning method, an image processing method, or a user specified method.

12. The system of claim 10, wherein the processor is configured to render the textured 3D watch object in the augmented reality display by:
obtaining a second image depicting a wrist;
determining a pose of the wrist in the second image;
obtaining at least one control point of the textured 3D watch object; and
rendering the textured 3D watch object on the wrist in the second image according to the pose of the wrist and the at least one control point of the textured 3D watch object.

13. The system of claim 10, wherein the processor is configured to generate the 3D mesh according to the watch case region, the first watch strap region, the second watch strap region, and the pre-defined skeleton containing the at least one straight part and the at least two curved parts by:
generating a two-dimensional (2D) mesh comprising a watch case sub-mesh of the 2D mesh, a first watch strap sub-mesh of the 2D mesh, and a second watch strap sub-mesh of the 2D mesh according to the watch case region, the first watch strap region, and the second watch strap region;
adjusting depth values of the 2D mesh to generate a first intermediate 3D mesh comprising a watch case sub-mesh of the first intermediate 3D mesh, a first watch strap sub-mesh of the first intermediate 3D mesh, and a second watch strap sub-mesh of the first intermediate 3D mesh;
duplicating and inverting the first intermediate 3D mesh to generate a second intermediate 3D mesh comprising a watch case sub-mesh of the second intermediate 3D mesh, a first watch strap sub-mesh of the second intermediate 3D mesh, and a second watch strap sub-mesh of the second intermediate 3D mesh;
merging the first intermediate 3D mesh with the second intermediate 3D mesh to generate a third intermediate 3D mesh comprising a watch case sub-mesh of the third intermediate 3D mesh, a first watch strap sub-mesh of the third intermediate 3D mesh, and a second watch strap sub-mesh of the third intermediate 3D mesh; and
applying a warping operation to the third intermediate 3D mesh according to the pre-defined skeleton to generate the 3D mesh.

14. The system of claim 13, wherein the processor is configured to adjust depth values of the 2D mesh to generate the first intermediate 3D mesh comprising the watch case sub-mesh of the first intermediate 3D mesh, the first watch strap sub-mesh of the first intermediate 3D mesh, and the second watch strap sub-mesh of the first intermediate 3D mesh by:
generating a 2D edge point set of the segmented watch region;
transforming the 2D mesh and the 2D edge point set onto a plane perpendicular to a z-axis in a 3D coordinate system to generate the first intermediate 3D mesh and a 3D edge point set, wherein all vertices of the first intermediate 3D mesh and all points of the 3D edge point set initially having a same z-value along the z-axis; and
adjusting a z-value of each vertex of the first intermediate 3D mesh according to a distance between each vertex and a closest point in the 3D edge point set, wherein the z-value is adjusted according to an inverse relationship with respect to the distance between each vertex and the closest point in the 3D edge point set such that the z-value is adjusted to a greater extent as the distance between each vertex and the closest point in the 3D edge point set decreases.

15. The system of claim 13, wherein the processor is configured to adjust depth values of the 2D mesh to generate the first intermediate 3D mesh comprising the watch case sub-mesh of the first intermediate 3D mesh, the first watch strap sub-mesh of the first intermediate 3D mesh, and the second watch strap sub-mesh of the first intermediate 3D mesh by:
generating a 2D edge point set of the segmented watch region;
transforming the 2D mesh and the 2D edge point set onto a plane perpendicular to a z-axis in a 3D coordinate system to generate the first intermediate 3D mesh and a 3D edge point set, wherein all vertices of the first intermediate 3D mesh and all points of the 3D edge point set initially having a same z-value along the z-axis; and
adjusting a z-value of each vertex of the first intermediate 3D mesh according to a distance between each vertex and a closest point in the 3D edge point set, wherein the z-value is adjusted according to an inverse relationship with respect to the distance between each vertex and the closest point on an edge of the 3D edge point set such that the z-value is adjusted to a greater extent as the distance between each vertex and the closest point on the edge decreases;
wherein the pre-defined skeleton is defined on an x-z plane;
wherein applying the warping operation to the third intermediate 3D mesh according to the pre-defined skeleton to generate the 3D mesh comprises:
adjusting the watch case sub-mesh of the third intermediate 3D mesh to be a watch case sub-mesh of a fourth intermediate 3D mesh so that a projection of the watch case sub-mesh of the fourth intermediate 3D mesh onto the x-z plane approximates the one straight part of the pre-defined skeleton;
adjusting the first watch strap sub-mesh of the third intermediate 3D mesh to be a first watch strap sub-mesh of the fourth intermediate 3D mesh so that the projection of the first watch strap sub-mesh of the fourth intermediate 3D mesh onto the x-z plane approximates one of the curved parts of the pre-defined skeleton;
adjusting the second watch strap sub-mesh of the third intermediate 3D mesh to be a second watch strap sub-mesh of the fourth intermediate 3D mesh so that the projection of the second watch strap sub-mesh of the fourth intermediate 3D mesh onto the x-z plane approximates one of the curved parts of the pre-defined skeleton; and
defining the fourth intermediate 3D mesh as the 3D mesh.

16. The system of claim 10, wherein the processor is configured to generate the 3D mesh according to the watch case region, the first watch strap region, the second watch strap region, and the pre-defined skeleton containing the at least one straight part and the at least two curved parts by:
defining a watch case sub-mesh of the 3D mesh, a first watch strap sub-mesh of the 3D mesh, and a second watch strap sub-mesh of the 3D mesh according to the watch case region, the first watch strap region, and the second watch strap region;
adjusting thickness values of the watch case sub-mesh of the 3D mesh to be greater than thickness values of the first watch strap sub-mesh of the 3D mesh and the second watch strap sub-mesh of the 3D mesh;
adjusting thickness values of the 3D mesh to incorporate a thickness transition around a first j oint of the watch case sub-mesh of the 3D mesh and the first watch strap sub-mesh of the 3D mesh; and
adjusting thickness values of the 3D mesh to incorporate a thickness transition around a second joint of the watch case sub-mesh of the 3D mesh and the second watch strap sub-mesh of the 3D mesh.

17. The system of claim 10, wherein the processor is configured to generate the 3D mesh according to the watch case region, the first watch strap region, the second watch strap region, and a pre-defined skeleton containing at least one straight part and at least two curved parts by:
generating a first two-dimensional (2D) mesh comprising a watch case sub-mesh of the first 2D mesh, a first watch strap sub-mesh of the first 2D mesh, and a second watch strap sub-mesh of the first 2D mesh according to the watch case region, the first watch strap region and the second watch strap region;
duplicating the first 2D mesh to generate a second 2D mesh comprising a watch case sub-mesh of the second 2D mesh, a first watch strap sub-mesh of the second 2D mesh, and a second watch strap sub-mesh of the second 2D mesh;
adjusting depth values of the first 2D mesh to generate a first intermediate 3D mesh comprising a watch case sub-mesh of the first intermediate 3D mesh, a first watch strap sub-mesh of the first intermediate 3D mesh, and a second watch strap sub-mesh of the first intermediate 3D mesh;
adjusting depth values of the second 2D mesh to generate a second intermediate 3D mesh comprising a watch case sub-mesh of the second intermediate 3D mesh, a first watch strap sub-mesh of the second intermediate 3D mesh, and a second watch strap sub-mesh of the second intermediate 3D mesh;
merging the first intermediate 3D mesh with the second intermediate 3D mesh to generate a third intermediate 3D mesh comprising a watch case sub-mesh of the third intermediate 3D mesh, a first watch strap sub-mesh of the third intermediate 3D mesh, and a second watch strap sub-mesh of the third intermediate 3D mesh; and
applying a warping operation to the third intermediate 3D mesh according to the pre-defined skeleton to generate the 3D mesh.

18. The system of claim 10, wherein the texture attributes comprise one of: an albedo texture, a roughness texture, or a normal texture, and
wherein the texture attributes are generated according to one of: the watch case region, the first watch strap region, or the second watch strap region.

19. A non-transitory computer-readable storage medium storing instructions to be implemented by a computing device having a processor, wherein the instructions, when executed by the processor, cause the computing device to at least:
obtain an image depicting a watch;
perform segmentation on the watch in the image to generate a segmented watch region comprising a watch case region, a first watch strap region, and a second watch strap region;
generate a three-dimensional (3D) mesh according to the watch case region, the first watch strap region, the second watch strap region, and a pre-defined skeleton containing at least one straight part and at least two curved parts;
generate texture attributes according to the segmented watch;
apply the texture attributes to the 3D mesh to generate a textured 3D watch object; and
render the textured 3D watch object in an augmented reality display.

20. The non-transitory computer-readable storage medium of claim 19, wherein the processor is configured by the instructions to render the textured 3D watch object in the augmented reality display by:
obtaining a second image depicting a wrist;
determining a pose of the wrist in the second image;
obtaining at least one control point of the textured 3D watch object; and
rendering the textured 3D watch object on the wrist in the second image according to the pose of the wrist and the at least one control point of the textured 3D watch object.
